# EUROPÄISCHE PATENTSCHRIFT

(11) **EP 4 497 002 B1**
(45) Veröffentlichungstag und Bekanntmachung des Hinweises auf die Patenterteilung: **09.07.2025**
(21) Anmeldenummer: 23782823.1
(22) Anmeldetag: 27.09.2023
(51) Int. Cl.: G01N 29/06, G01N 29/22, G01N 29/27, G01N 29/44

(54) **VERFAHREN ZUR AUTOMATISIERTEN DEFEKT-KLASSIFIKATION BEI AKUSTISCHER ULTRASCHALLMIKROSKOPIE, SOFTWAREPROGRAMMPRODUKT SOWIE ULTRASCHALLMIKROSKOP**
METHOD FOR AUTOMATED DEFECT CLASSIFICATION IN ACOUSTIC ULTRASOUND MICROSCOPY, SOFTWARE PROGRAM PRODUCT AND ULTRASOUND MICROSCOPE
PROCÉDÉ DE CLASSIFICATION AUTOMATISÉE DE DÉFAUTS DANS UNE MICROSCOPIE ACOUSTIQUE À ULTRASONS, PRODUIT PROGRAMME LOGICIEL ET MICROSCOPE À ULTRASONS

(30) Priorität: 04.10.2022 DE 102022125479
(43) Veröffentlichungstag der Anmeldung: 29.01.2025
(73) Patentinhaber: PVA TePla Analytical Systems GmbH, 73463 Westhausen (DE)
(72) Erfinder: HOFFROGGE, Peter, 73447 Oberkochen (DE); SUKUMARAN NAIR, Arya, 73430 Aalen (DE); BAUMANN, Luca, 73463 Westhausen (DE); WOLF, Mario, 01683 Nossen (DE)
(74) Vertreter: Seemann & Partner Patentanwälte mbB
(86) Internationale Anmeldenummer: PCT/EP2023/076671
(87) Internationale Veröffentlichungsnummer: WO 2024/074367

(56) Entgegenhaltungen:
- US-A1- 2021 073 969
- US-B2- 8 146 429
- WEI WANG ET AL: "Using convolutional neural network for intelligent SAM inspection of flip chips", MEASUREMENT SCIENCE AND TECHNOLOGY, IOP, BRISTOL, GB, vol. 32, no. 11, 13 August 2021 (2021-08-13), pages 115022, XP020370238, ISSN: 0957-0233, [retrieved on 20210813], DOI: 10.1088/1361-6501/AC1615

## Beschreibung

Die Erfindung betrifft ein Verfahren zur automatisierten Defekt-Klassifikation einer Probe mittels akustischer Ultraschallmikroskopie, ein Softwareprogrammprodukt sowie ein Ultraschallmikroskop.

Qualitätsinspektion mittels Ultraschall, auch akustische Mikroskopie genannt, ermöglicht die zerstörungsfreie Vermessung und Inspektion von Materialien und Bauteilen. Bei der Bilderzeugung in einem Ultraschallmikroskop wird eine zu untersuchende Probe zeilenweise abgerastert bzw. gescannt und an jedem Pixel ein kurzer Ultraschallpuls erzeugt, dessen von der Probe reflektiertes Ultraschallsignal Pixel für Pixel ausgewertet wird. Typischerweise wird der zeitliche Verlauf des Signals innerhalb eines festgelegten Zeitbereichs (Gate) analysiert. Der zu analysierende Zeitbereich kann auch relativ zum Oberflächensignal der Probe definiert werden, um so sicherzustellen, dass die Probe in einer vorher festgelegten Tiefe, relativ zur Oberfläche abgebildet wird (Surfacetrigger).

In der Regel wird für jedes Pixel bzw. jeden Rasterpunkt die maximale Signalintensität bzw. -amplitude innerhalb des ausgewählten Zeitbereichs durch einen Grauwert repräsentiert und so eine Abbildung der Probe erzeugt. Es können allerdings auch komplexe Datenverarbeitungsoperatoren wie z.B. Filter oder Transformationen zum Einsatz kommen, um diesen Grauwert zu erzeugen. Die entstehenden Mikrographien bilden die Probe in der Ebene senkrecht zum Transducer ab und werden als C-Scan bezeichnet. Ein weiterer Abbildungsmodus ist der B-Scan. Ein B-Scan stellt einen akustischen Schnitt durch die Probe dar. Entlang der X-Achse des Bildes wird eine Ortskoordinate aufgetragen, entlang der Y-Achse die Flugzeit des Schallsignals.

Bei der Verwendung von akustischer Mikroskopie in der Fertigungskontrolle und der statistischen Qualitätskontrolle wird die Auswertung der C-Scan-Bilder in der Regel von automatisierter Bildverarbeitung übernommen. Dabei kommen neben konventionellen Algorithmen wie Schwellwertanalysen, morphologischen Filtern und matrixbasierten Bildoperationen auch bildbasierte Lösungen mittels künstlicher Intelligenz zum Einsatz. Ziel der Bildverarbeitung ist es, kritische Fehler in den Bauteilen sicher zu detektieren bei gleichzeitig möglichst wenigen Fehlbewertungen in Form von falsch positiven bewerteten Strukturen.

Dazu werden ein oder mehrere Bilder von der Ultraschallinspektion an eine Bildverarbeitung übergeben, die dann die erhaltenen Bilder auf verschiedene Merkmale untersucht. Die Koordinaten der gefundenen Fehler oder auch Eigenschaften werden dann im Anschluss an ein Fertigungsleitsystem übertragen. In einigen Fällen wird eine finale Gut/Schlecht-Bewertung durchgeführt und defektbehaftete Bauteile aussortiert. Insbesondere im Bereich der Halbleiterfertigung wird für die Anbindung der Kommunikationsstandard SECS/GEM verwendet.

Dieses Verfahren funktioniert gut bei klassischen Halbleiterbauteilen wie z. B. einzelnen Bauteilen mit einer Kunststoffvergussmasse, DCB-basierter Leistungselektronik mit klassischen Lotverbindungen oder mittels Fusionbond zusammengefügten Wafern. Bei all diesen Anwendungen ist es möglich, Defekte mit einer eindeutigen Helligkeit gegenüber den restlichen fehlerfreien Bereichen darzustellen.

Methodische Grenzen für die konventionelle Bildverarbeitung werden immer dann erreicht, wenn der Helligkeitswert eines Pixels nicht mehr eindeutig einem Fehler zugeordnet werden kann und der gleiche Grauwert sowohl bei Bauteildefekten als auch bei intakten Strukturen auftreten kann. Hier kann die Fähigkeit der Bildverarbeitung verbessert werden, indem die Bauteilbereiche erkannt werden und nur eine lokale Analyse durchgeführt wird.

Die Analyse von den Ultraschalldaten komplexer Bauteile ist oftmals nicht mehr mit konventioneller Bildverarbeitung zu realisieren. Bei komplexen Bildinhalten kann auch eine auf maschinellem Lernen basierende Bildanalyse verwendet werden. Das bildbasierte maschinelle Lernen erfordert allerdings große Datenmengen zum Trainieren neuronaler Netze. Insbesondere für das Trainieren selten auftretender Defekttypen kann es sehr aufwändig sein, die benötigte hohe Anzahl von defekten Bauteilen zu bekommen. Eine Umgehungslösung ist beispielsweise ein künstliches Verstärken von einigen wenigen Beispieldefekten. Dies kann allerdings zu Fehlinterpretationen des Netzwerkes führen, da nicht repräsentative Daten zum Trainieren Verwendung finden. Ansätze mit bildbasierter künstlicher Intelligenz sind in der Anwendung der Defekterkennung bei akustischer Mikroskopie an Materialien und Bauteilen somit sehr aufwendig und wenig zuverlässig, da nur ungenügend viel Bildmaterial zum Training der künstlichen neuronalen Netze zur Verfügung steht und für eine umfassende Modellbildung nicht ausreichend gute Datensätze zur Verfügung stehen.

Alternative Analysemethoden sind ebenfalls bekannt. Ein auf einer Bildanalyse beruhendes Verfahren ist in Wei Wang et al., "Using convolutional neural network for intelligent SAM inspection of flip chips", Meas. Sci. Technol. 32 (2021) 115022 beschrieben, bei dem mittels akustischer Mikroskopie (SAM) Bilder von Lötstellen an Flip-Chip-Gehäusen erzeugt wurden, die angesichts der geringen Größe der Lötstellen an einer zu geringen Auflösung litten. Diese zweidimensionalen SAM-Bilder wurden einem intelligenten Diagnosealgorithmus zur Verbesserung der Auflösung und zur Klassifikation der Lötstellen zugeführt, wobei eine CNN-basierte Super Resolution Technik und ein CNN-basiertes Klassifikationsnetzwerk kombiniert wurden.

US 2021/073969 A1 offenbart ein weiteres bildbasiertes Verfahren und eine Vorrichtung zur Bestimmung mindestens eines unbekannten Effekts von Defekten eines Elements eines Photolithographieprozesses. Ein CNN wird unter Verwendung einer Vielzahl von zu Trainingszwecken verwendeten Bildern, den zu Trainingszwecken verwendeten Bildern zugeordneten Konstruktionsdaten und entsprechenden Effekten der Defekte trainiert und bestimmt mindestens einen unbekannten Effekt der Fehler in einem gemessenen Bild mit den zugehörigen Konstruktionsdaten. Das Verfahren vermeidet die Herstellung eines Referenzbildes zur Beurteilung der Qualität einer photolithographischen Maske und/oder eines Wafers.

US 8 146 429 B2 offenbart ein Verfahren zur Bestimmung der Art eines Fehlers in einer Schweißnaht, bei dem eine Fehlerstelle und ein entsprechendes Defektsignal durch Analysieren von Ultraschall-Antwortsignalen an einer Vielzahl von Messstellen entlang der Schweißnaht bestimmt wird. Das Defektsignal und die Vielzahl von Defektnäherungssignalen, die den Ultraschall-Antwortsignalen von Messstellen auf jeder Seite der Fehlerstelle entsprechen, werden in ein trainiertes künstliches neuronales Netz eingegeben. Dieses gibt den Typ des an der Fehlerstelle befindlichen Fehlers auf der Grundlage des Defektsignals und der Vielzahl von Defektnäherungssignalen und die Art des Defekts an der Defektstelle aus. Es kann auch eine Fehlerschwereklassifizierung auf der Grundlage des Defektsignals und der Mehrzahl von Defektnäherungssignalen bestimmen und die Schweregradklassifizierung ausgeben.

Demgegenüber liegt die der Erfindung zugrundeliegende Aufgabe darin, die automatische Defekterkennung in der zerstörungsfreien Untersuchung auch komplexer Materialien und Bauteile, insbesondere komplexer Halbleiterproben, zu verbessern.

Diese Aufgabe wird durch ein Verfahren zur automatisierten Defekt-Klassifikation einer Probe mittels akustischer Ultraschallmikroskopie, insbesondere im Frequenzbereich von 10 MHz bis 2000 MHz, gelöst, wobei mit einem Ultraschallmikroskop mit wenigstens einem Ultraschalltransducer und einer Pulserzeugungs- und Empfängereinheit, die mit dem wenigstens einen Ultraschalltransducer verbunden ist, eine Probe abgetastet wird, die Probe schrittweise relativ zu dem oder den Ultraschalltransducern an Rasterpunkten positioniert wird und an jedem Rasterpunkt ein oder mehrere Ultraschallsignale erzeugt und nach Reflektion an und/oder in der Probe und/oder nach Transmission durch die Probe aufgezeichnet wird oder werden, wobei die zeitlichen Verläufe der aufgezeichneten reflektierten und/oder transmittierten Ultraschallsignale digitalisiert und mittels wenigstens eines neuronalen Netzes bezüglich Defekten analysiert, insbesondere klassifiziert, werden, welches zuvor in einem initialen Training mittels eines Deep Learning Algorithmus anhand von Ultraschallmikroskop-Scans eines oder mehrerer zur Probe typengleichen Kontrollproben unsupervised oder mit bekannten und gelabelten Defekten trainiert worden war.

Das erfindungsgemäße Verfahren ist auf vielfältige Probentypen anwendbar, von einfachen Materialproben bis zu komplexen Halbleiterproben, und beruht darauf, dass Ultraschallmikroskope, die dem heutigen Stand der Technik entsprechen, es erlauben, die Schallsignale zu jedem Abtastpunkt zu erfassen, in Echtzeit zu bearbeiten und zu speichern. Diese zeitlichen Verläufe werden auch als A-Scan-Signale bezeichnet. Damit kann anstelle einer bisher bildbasierten Analyse eine signal- oder volumenbasierte Analyse der vollständigen zeitlichen Signalverläufe durchgeführt werden.

Grundsätzlich wird hierdurch das Problem der unvermeidbaren Datenreduktion bei der älteren bildbasierten Analyse vermieden, welches dadurch verursacht wird, dass bei der Bilderzeugung für jedes Pixel, also jeden Rasterpunkt, das jeweils erfasste und gegebenenfalls komplexe Ultraschallsignal auf einen einzigen Wert reduziert wird, beispielsweise das Maximum der Amplitude im betrachteten Zeitfenster. Mit dieser Reduktion geht die reichhaltige Information, die im Ultraschallsignal enthalten ist, für die Analyse verloren. Dies führt unter anderem dazu, dass insbesondere bei hohen Verstärkungen das Rauschen eines einzigen Grauwerts im Vergleich zu den erforderlichen Schwellwerten bei einer konventionellen Bildanalyse eine kritische Größe erreichen und die Sicherheit einer Fehlerentscheidung negativ beeinflussen.

Das Ultraschallsignal komplexer Halbeiterproben beinhaltet häufig Signalanteile, die nicht nur direkt zu der eingekoppelten Kompressionswelle korrespondieren, sondern es werden auch durch andere Wellentypen Signalanteile erzeugt. In schnellen Materialen kann es zu einer sogenannten Modenkonversion kommen. Hier erzeugt eine eingekoppelte Kompressionswelle an der Grenzfläche sowohl einen Kompressionswellenanteil als auch einen Scherwellenanteil, die sich beide mit unterschiedlicher Ausbreitungsgeschwindigkeit in der Probe bewegen und somit zeitlich versetzte Echosignale erzeugen. Liegen sich zwei Grenzflächen mit einem großen Reflektionskoeffizienten gegenüber, so kommt es zur Ausbildung von Mehrfachechos, die durch hin und zurückreflektierte Schallwellen verursacht werden.

Transducer mit einem großen Öffnungswinkel können in Festkörpern auch Rayleigh- und Lamb-Wellen hervorrufen. Alle diese Signale können für eine Defekt/Nicht Defekt Entscheidung herangezogen werden. Ein schwach ausgeprägter Defekt erzeugt so an vielen verschiedenen Stellen des Signals charakteristische Signaturen. Diese Signaturen liefern eine bessere Datenbasis zur Identifikation von Defekten als nur ein einziger Grauwert, da verschiedene Bereiche des Signals für die Analyse herangezogen werden können.

Die Verwendung eines künstlichen neuronalen Netzes, das das gesamthafte Signal einer Grenzfläche bewerten und klassifizieren kann, erhöht die Zuverlässigkeit der Entscheidungen des Netzwerks bei seiner Analyse der Daten und übertrifft diejenige bildbasierter Methoden. Im Gegensatz zu der häufig begrenzten Datenverfügbarkeit und des erheblichen menschlichen Aufwands beim Labeln von Bilddaten, die zum Training eines künstlichen neuronalen Netzes zur Bilddatenanalyse erforderlich sind, konzentriert sich das vorgestellte Verfahren somit auf die Klassifizierung einzelner A-Scan-Signale. Hierzu ist es ausreichend, ein künstliches neuronales Netz mit einer Vielzahl von A-Scan-Signalen von repräsentativen und relevanten Bereichen zu trainieren. Selbst eine 4-stellige Anzahl von solchen Signalen stellt im Bezug zu einem kompletten C-Scan-Bild nur einen kleinen Prozentsatz der Gesamtdatenmenge dar.

Das erfindungsgemäße Verfahren zielt darauf ab, das Netzwerk mit Signalen aus dem relevanten Bereich zu trainieren, so dass das Netzwerk Informationen ableiten und die Verwendbarkeit der vollständigen Informationen des Signals für das Deep Learning Netzwerktraining untersuchen kann. Deep Learning Netzwerke sind sehr effizient bei der automatisierten Feature-Extraktion und erreichen hier oftmals bessere Ergebnisse, als sie bei einer manuellen Selektion erzielt werden können. Deep Learning Netzwerke sind in der Lage, durch richtige Optimierung und kontinuierliches Lernen mehr Rückschlüsse zu ziehen als ein menschlicher Bediener. 3D-Daten, die vom akustischen Rastermikroskop erfasst werden, werden als Rohdaten für das Training des statistischen Modells verwendet. Diese Daten ermöglichen es, alle individuellen Gate-Einstellungen wie A-Scan, C-Scan, B-Scan, Slice und 3D-Scan (einschließlich Amplituden- und Flugzeitdaten) zu rekonstruieren, so dass die Probe in einzelnen Schichten angezeigt werden kann.

Während bisherige Verfahren in ihrer Anwendbarkeit auf die sauberen Signale von Ultraschalltransducern angewiesen und bei Breitband-Ultraschalltransducern aufgrund der vielen Signale verschiedenen Ursprungs überfordert sind, ist oder sind in Ausführungsformen des erfindungsgemäßen Verfahrens der oder die Ultraschalltransducer als Breitband-Ultraschalltransducer ausgebildet, insbesondere mit einer Bandbreite von wenigstens 10 %, insbesondere wenigstens 20 %, wobei der oder die Ultraschalltransducer insbesondere ausgebildet ist oder sind, Signale, die auf Modenkonversion, Mehrfachechos, Rayleigh-Wellen, Lamb-Wellen und/oder aufgrund von intrinsischen Eigenschaften des Transducers entstehen, aufzunehmen und an einen Empfänger weiterzuleiten.

Das erfindungsgemäße Verfahren verwendet neuronale Netze, die entweder supervised oder unsupervised trainiert wurden. Im ersten Fall wird eine Kontrollprobe oder werden mehrere Kontrollproben, von denen wenigstens eine defektbehaftet ist, gescannt, deren Defekte entweder für einen Experten sichtbar sind oder die aus anderen Untersuchungen bekannt sind. Der Experte markiert dann einen oder mehrere Bereiche der Kontrollprobe, die fehlerfrei sind und einen oder mehrere defektbehaftete Bereiche. Das Training des neuronalen Netzes bereitet dieses darauf vor, entsprechende Ultraschallsignale einer der Kategorien zuzuweisen. Bei dem Deep Learning wird nicht vorgegeben, um welche Signalstrukturen es sich dabei handelt, sondern das neuronalen Netz findet von selbst die aussagekräftigsten Signalstrukturen.

Beim unsupervised Learning wird eine Kontrollprobe gescannt, die keine Defekte aufweist. Die Ultraschallsignale dieser Kontrollprobe zeigen dem daran trainierten neuronalen Netz, wie die Ultraschallsignale idealerweise aussehen sollten. In der Trainingsphase hat das neuronale Netz dabei den vollen Umfang akzeptabler Signale für verschiedene Strukturen der Kontrollprobe gelernt. Dies kann eine große Vielzahl verschiedener Strukturen und entsprechender Signalverläufe sein, die in konventioneller Art und Weise nicht abbildbar gewesen wären. Wenn später eine defektbehaftete Probe gescannt wird, werden die Ultraschallsignale an den Positionen der Defekte nicht im Spektrum der akzeptablen Signale sein, sondern sich von diesen unterscheiden. Es kann dann anhand eines Kriteriums, welches die Abweichung vom idealen Signalbild beschreibt, beurteilt werden, ob ein Defekt vorliegt oder nicht.

Es ist sinnvoll, das neuronale Netz dabei mit Ultraschallsignalen zu trainieren, die mit den gleichen Parametern aufgenommen worden sind wie später die zu klassifizierenden Signale. Dies betrifft unter anderem die Bandbreite und Übertragungscharakteristik der Ultraschalltransducer, aber auch die Signalfrequenz des Ultraschallpulses.

In Ausführungsformen ist oder sind der oder die Ultraschalltransducer als Breitband-Ultraschalltransducer ausgebildet, insbesondere mit einer Bandbreite von wenigstens 10 %, insbesondere wenigstens 20 %, wobei der oder die Ultraschalltransducer insbesondere ausgebildet ist oder sind, Signale, die auf Modenkonversion, Mehrfachechos, Rayleigh-Wellen, Lamb-Wellen und/oder aufgrund von intrinsischen Eigenschaften des Transducers entstehen, aufzunehmen und an einen Empfänger weiterzuleiten. Die von Breitband-Ultraschalltransducern übermittelten Ultraschallsignale enthalten aufgrund ihrer hohen Bandbreite wesentlich mehr Informationen als die üblicherweise verwendeten Ultraschalltransducer, die eine kleinere Bandbreite aufweisen oder mit einer kleineren Bandbreite betrieben werden. Diese Informationsdichte hat es bei der Verwendung von Breitband-Ultraschalltransducern bislang unpraktikabel gemacht, eine entsprechende auf neuronalen Netzen beruhende Bildanalyse auf mit Hilfe von Breitband-Ultraschalltransducern erzeugten Daten anzuwenden. Das erfindungsgemäße Verfahren hingegen nutzt die zusätzlich verfügbaren Informationen zur Verbesserung der Trennschärfe der Klassifikation. Die hohe Informationsdichte der Breitbandsignale ermöglicht es auch, dass Training der neuronalen Netze anhand nur eines oder sehr weniger Scans zu ermöglichen.

In Ausführungsformen ist das neuronale Netz ein neuronales Faltungsnetzwerk (CNN), insbesondere mit einer 1d-Resnet Architektur mit 1-dimensionalen Faltungsblöcken, wobei insbesondere der Deep Learning Algorithmus eine automatisierte Feature Extraction umfasst. Alternativ ist das neuronales Netz ein rekurrentes neuronales Netzwerk (RNN), insbesondere mit einer Long Short-Term Memory (LSTM)- oder Gated Recurrent Unit (GRU)-basierten Architektur, wobei insbesondere der Deep Learning Algorithmus eine Anpassung einer feed-forward-stage des RNN umfasst. Das neuronale Netz kann auch als ein Hybrid aus einem CNN und einem RNN ausgebildet sein.

In Ausführungsformen werden die Ultraschallsignale vor der Analyse mittels eines deterministischen Algorithmus geglättet, insbesondere mittels Wavelet-Filterung, insbesondere auf der Grundlage von Daubechies Wavelets oder Mexican Hat Wavelets. Auch die Ultraschallsignale, anhand derer das neuronale Netz trainiert wurde, sollten in dem Fall der gleichen Vorverarbeitung unterzogen worden sein. Die Glättung kann zur Eliminierung von Signalartefakten dienen, die bauartbedingt entstehen können.

In Ausführungsformen wird der zeitliche Verlauf der Ultraschallsignale als diskrete Zeitreihe in der Form {Signallänge x 1} analysiert. Durch die Digitalisierung kann die diskrete Zeitreihe eine Länge von mehreren tausend Datenpunkten enthalten, sodass sich ein Vektor der gleichen Länge ergibt. In diesem Fall wird jeder Rasterpunkt bzw. jedes Pixel einzelnen dahingehend analysiert, ob es zu einem Defekt gehört oder nicht. Zusätzlich oder alternativ dazu kann eine volumetrische Analyse erfolgen, wobei mehrere Ultraschallsignale benachbarter Rasterpunkte als diskrete Zeitreihen von, insbesondere in einem Rechteck der Kantenlängen *n* x *m* angeordneten, Rasterpunkten als Datensatz der Form {Signallänge x *n* x *m*}*,* wobei wenigstens eines von *n* und *m* ≥ 2 ist, zusammengefasst und analysiert werden, wobei insbesondere *n* = *m,* wobei insbesondere *n* und *m* ungerade Zahlen sind. Dies umfasst eine zeilenweise oder spaltenweise Zusammenfassung mehrerer benachbarter Pixel bzw. eine Zusammenfassung von Pixeln in einer rechteckigen bzw. quadratischen Anordnung, wobei dann, wenn beispielsweise bei einer quadratischen Anordnung eine ungerade Anzahl von Pixeln als Kantenlänge gewählt wird, das Zentrum des Quadrats wiederum mit dem zentralen Pixel zusammenfällt. Die Analyse bzw. das Training des neuronalen Netzes kann bei der Zusammenfassung benachbarter Pixel, unabhängig davon, ob dies in einer linearen oder in einer flächigen Form erfolgt, dahingehend angepasst werden, dass zentrale Pixel höher gewichtet werden als periphere Pixel.

Ein Gewinn an Verarbeitungsperformance wird in Ausführungsformen erzielt, wenn die Datensätze der diskretisierten Ultraschallsignale zweidimensional sind, mit dem diskretisierten Ultraschallsignal in der ersten Dimension und Zeitschritten von 1 in der zweiten Dimension. Der tatsächliche Wert der zeitlichen Schritte hängt von der Digitalisierungsrate des analogen Ultraschallsignals ab.

In Ausführungsformen weist die Klassifikation eine oder mehrere Klassen für die Abwesenheit von Defekten, insbesondere mit einer oder mehreren Klassen für eine oder mehrere Strukturen, und eine oder mehrere Klassen für Defekte, insbesondere verschiedene Arten von Defekten, auf.

Bei der Klassifizierung wird in Ausführungsformen eine Konfidenz für die jeweilige Klassifikation ermittelt, welche insbesondere in einer Darstellung zu jedem Rasterpunkt durch einen Intensitätswert dargestellt wird.

Unter anderem für die systematische Analyse von Fehlern bei der Produktion der Proben ist in Ausführungsformen vorgesehen, für Rasterpunkte die Analyse mit Defekt-Klassifikation durchzuführen und die Klassifikation, und insbesondere auch eine Konfidenz hierzu, einem C-Scan-Bild als Farb- oder Grauwert zu überlagern, wobei insbesondere die Konfidenz als Helligkeitsparameter, Farbparameter oder Transparenzparameter einfließt.

In Ausführungsformen werden die Ultraschallsignale vor der Verarbeitung durch das neuronale Netz mittels einer Regression, insbesondere durch Interpolation oder mittels eines trainierten statistischen Modells, in ein Signal einer vordefinierten Länge und/oder vordefinierten zeitlichen Schrittweite umgewandelt, insbesondere ohne Informationsverlust bezüglich der Probe, wobei insbesondere Rauschen, Signalartefakte und/oder bauartbedingte Störsignale und Verzeichnungen reduziert werden. Unter einem Informationsverlust wird dabei erfindungsgemäß der Verlust von für die Probe indikativen Informationen verstanden, während Störsignale und Verzeichnungen systemimmanent sind und keine Informationen über die Probe selbst enthalten. Obwohl idealerweise die Trainingsdaten an der Kontrollproben unter den gleichen Umständen und Parametern aufgenommen werden wie später die Ultraschallsignale an den zu überprüfenden Proben, lassen sich in der Praxis nicht alle Testparameter genau wiederholen, sodass es sinnvoll sein kann, zunächst die Systemantwort auf verschiedene Situationen zu erfassen und zu analysieren und diejenigen Anteile der Systemantwort, die bekannt sind, bei der Vorverarbeitung der Ultraschallsignale vor dem Training und vor der Analyse zu entfernen, wie beispielsweise Rauschen, Signalartefakte, Störsignale und Verzeichnungen.

Zusätzlich oder alternativ dazu können die Ultraschallsignale mittels einer Encoder-Decoder-Architektur anomaliebereinigt werden, wobei die Ultraschallsignale in Komponenten zerlegt und, basierend auf antrainiertem Domainwissen, wieder rekonstruiert werden, wobei aus der Differenz aus Eingangssignal und rekonstruiertem Signal ein Rekonstruktionsfehler abgeleitet wird. Die Encoder-Decoder-Architektur bildet die empfangenen Ultraschallsignale auf gute Ultraschallsignale ab, ist also ein Beispiel für eine Regression. Dazu wird zunächst ein statistisches Modell, beispielsweise ein neuronales Netz, so trainiert, dass es gute Signale wiederum auf gute Signale abbildet. Es handelt sich hierbei um einen Fall von unsupervised learning, welches das genannte Domainwissen erzeugt, das dann in dem neuronalen Netz enthalten ist. Anomale Signale, die aufgrund der Anwesenheit von Defekten von den guten Signalen abweichen, werden durch die Encoder-Decoder-Architektur wiederum auf die zuvor erlernten guten Signale abgebildet, also anomaliebereinigt. Die Differenz der Ausgangssignale von den Eingangssignalen bildet somit eine Basis für eine Defekt-Klassifizierung, die beispielsweise über Schwellwerte für einen Grad der Abweichung dargestellt werden kann.

In Ausführungsformen wird ein rekonstruierter 3D-Datensatz des Probenvolumens der Probe unter Berücksichtigung der Eigenschaften der Ultraschallausbreitung in der Probe von einem trainierten statistischen Modell erzeugt, welche um Effekte durch Defokussierung, Mehrfachechos, modenkonvertierte Signale und intrinsische Transducersignale bereinigt ist, der die Erzeugung von Schnittbildern entlang beliebiger Ebenen erlaubt. Diese Effekte lassen sich modellieren und aus den Ultraschallsignalen zurückrechnen, also entfernen.

Als Grundlage für das initiale Training wird in Ausführungsformen ein untrainiertes neuronales Netz oder ein anhand wenigstens einer typenfremden Kontrollprobe wenigstens eines fremden Probentyps vortrainiertes neuronales Netz verwendet. Das Training im ersten Fall wird etwas länger dauern, da das neuronale Netz *ab initio* trainiert wird, während im letztgenannten Fall schon Informationen vorhanden sind, die an die vorliegende Kontrollprobe nur noch angepasst werden müssen. Damit konvergiert das Lernen vergleichsweise schnell, abhängig von der Ähnlichkeit mit zuvor bereits trainierten Probentypen. Nach Vollendung des Trainings für den aktuellen Probentypen kann die aktuelle Version des neuronalen Netzes für spätere Verwendung am gleichen Probentypen gespeichert werden, sodass eine Datenbank für neuronale Netze für verschiedene Prototypen aufgebaut wird, ohne dass jedes Mal aufs Neue ein neuronales Netz trainiert werden muss.

Für das initiale Training des neuronalen Netzes erfolgt das Labelling von Defekten und anderen Teilen der Kontrollprobe in Ausführungsformen von Hand, insbesondere an einem C-Scan-Schnitt, wobei insbesondere die von Hand markierten Bereiche weniger als 50 %, insbesondere weniger als 20 %, insbesondere weniger als 10 %, der Fläche des Scans der Kontrollprobe ausmachen. Das erfindungsgemäße Verfahren kommt somit mit wesentlich weniger Ausgangsmaterial aus, da der volle Informationsgehalt der Ultraschallsignale zu jedem Pixel verwendet wird. Daher genügt eine Beschränkung auf relativ kleine Bereiche der Kontrollprobe.

Die der Erfindung zugrundeliegende Aufgabe wird auch durch ein Softwareprogrammprodukt mit Programmcodemitteln gelöst, welche bei Ausführung auf einer Datenverarbeitungsanlage eines Ultraschallmikroskops das Ultraschallmikroskop veranlassen, ein zuvor beschriebenes erfindungsgemäßes Verfahren auszuführen. Alternativ kann auch das Training des neuronalen Netzes und die Analyse der Ultraschallsignale auf einer separaten Datenverarbeitungsanlage erfolgen.

Ferner wird die der Erfindung zugrundeliegende Aufgabe auch durch ein Ultraschallmikroskop mit einem Positioniersystem mit einer Halterung für eine Probe, wenigstens einem Ultraschalltransducer, insbesondere Breitband-Ultraschalltransducer, einer Pulserzeugungs- und Empfängereinheit, die mit dem wenigstens einen Ultraschalltransducer verbunden oder verbindbar ist, einer Datenverarbeitungsanlage und einer Analog-Digital-Wandlereinheit, gelöst, wobei das Ultraschallmikroskop, insbesondere mittels eines in der Datenverarbeitungsanlage gespeicherten ausführbaren zuvor beschriebenen Softwareprogrammprodukts, zur Durchführung eines zuvor beschriebenen erfindungsgemäßen Verfahrens ausgebildet und eingerichtet ist.

Das Softwareprogrammprodukt und das Ultraschallmikroskop verwirklichen die gleichen Vorteile, Eigenschaften und Merkmale wie das zuvor beschriebene erfindungsgemäße Verfahren.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung der Signalentstehung bei der Ultraschallmikroskopie,
- Fig. 2: eine schematische Darstellung einer 1D CNN-Architektur,
- Fig. 3: eine schematische Darstellung einer LSTM-Architektur,
- Fig. 4: eine schematische Darstellung eines Unsupervised Deep Learning,
- Fig. 5: eine schematische Darstellung eines Deep Learning mit Vorverarbeitung,
- Fig. 6: Zeitverlaufssignale aus verschiedenen Klassifikationen,
- Fig. 7: eine schematische Darstellung eines generellen Arbeitsablaufs bei einer Datenanalyse mittels maschinellem Lernen und
- Fig. 8: eine schematische Darstellung von Komponenten eines erfindungsgemäßen Verfahrens.

In den Zeichnungen sind jeweils gleiche oder gleichartige Elemente und/oder Teile mit denselben Bezugsziffern versehen, so dass von einer erneuten Vorstellung jeweils abgesehen wird.

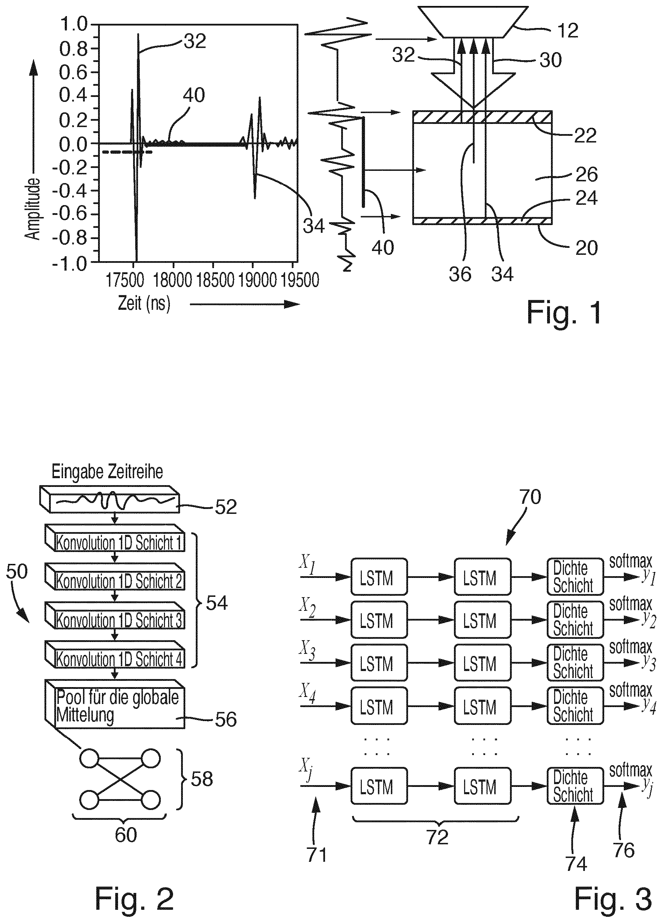

Fig. 1 zeigt eine schematische Darstellung der Signalentstehung bei der Ultraschallmikroskopie. Wie in der rechten Bildhälfte zu sehen ist, wird durch einen Ultraschalltransducer 12 ein von einem nicht dargestellten Pulsgenerator, beispielsweise einem Piezo-Kristall, generierter Ultraschallpuls 30, der üblicherweise eine Frequenz zwischen 10 MHz und 2000 MHz aufweist, auf eine zu untersuchende Probe 20 geleitet. An der Frontfläche 22 der Probe 20 wird ein Teil des Pulses 30 als Echo 32 reflektiert, ein weiterer Teil des Pulses wird an der Rückfläche 24 als Echo 34 reflektiert. Dazwischen kann ein weiterer Teil des Pulses 30 an internen Strukturen und/oder Fehlern im inneren Volumen 26 der Probe als Echo 36 reflektiert werden. Die zurücklaufenden Echos 32, 34, 36 werden wiederum durch den Ultraschalltransducer 12 zu einem nicht dargestellten Empfänger geleitet. Hierbei kann es sich um denselben Piezo-Kristall handeln, der auch den Puls 30 generiert hat. Entsprechende Ultraschallmikroskope sind bekannt.

In der linken Bildhälfte ist der zeitliche Verlauf der Amplitude des reflektierten Signals dargestellt, der sogenannte A-Scan. Entsprechend der kürzeren Laufzeit kommt zuerst das Echo 32 von der Frontfläche zurück. Dieses hat auch die größte Amplitude. Es folgt das wesentliche schwächere Echo 36 aus dem Inneren der Probe, und zuletzt kommt das Echo 34 des Pulses von der Rückfläche 26. Dieser Signalverlauf ist schematisch auch in vertikaler Ausrichtung entsprechend dem Tiefenverlauf der Probe 20 dargestellt.

Für die Analyse der Probe hinsichtlich Defekten ist der mittlere Teil des Signals interessant. Deshalb wird ein zeitliches Gate 40 angewendet, welches die Echos 32, 34 des Pulses 30 von der Frontfläche 22 und der Rückfläche 34 ausschließt. Das innerhalb des Gates 40 liegende Signal enthält eine Vielfalt von Informationen über das Innenleben der Probe 20 am aktuellen Rasterpunkt bzw. Pixel.

In Fig. 2 ist eine 1D CNN-Architektur eines Faltungsnetzwerks (CNN) 50 schematisch dargestellt. Als Eingangssignal dient der diskrete zeitliche Verlauf des Amplitudensignals im Gate 40 ("Input Time Series"), welcher in einen Input-Layer 52 eingebracht wird. Es folgt eine Folge von Faltungsebenen 54, die sogenannte Faltungsbasis, gefolgt von einer Mittelungsschicht 56 ("Global Averaging Pool") und einem Klassifikator 58 mit einer oder mehreren voll vernetzten Lagen, welche eine Anzahl von K Ausgangsklassifikationen 60 herausgibt, aus welchen hervorgeht, ob die Probe 20 an der aktuellen Position einen Defekt aufweist oder nicht, und gegebenenfalls, welche Art von Defekt oder welche Art von Struktur.

Fig. 3 zeigt die Alternative eines rekurrenten neuronalen Netzwerks 70, welches auf der Seite des Inputs 71 eine Reihe von LSTM-Schichten 72, gefolgt von einem "Dense Layer" 74 aufweist. Der Output des Dense Layer 72 wird beispielsweise mittels einer Softmax-Funktion 76 verarbeitet, um zu Vorhersagen 78 zu gelangen, die den Klassifikationen bei einem CNN entsprechen.

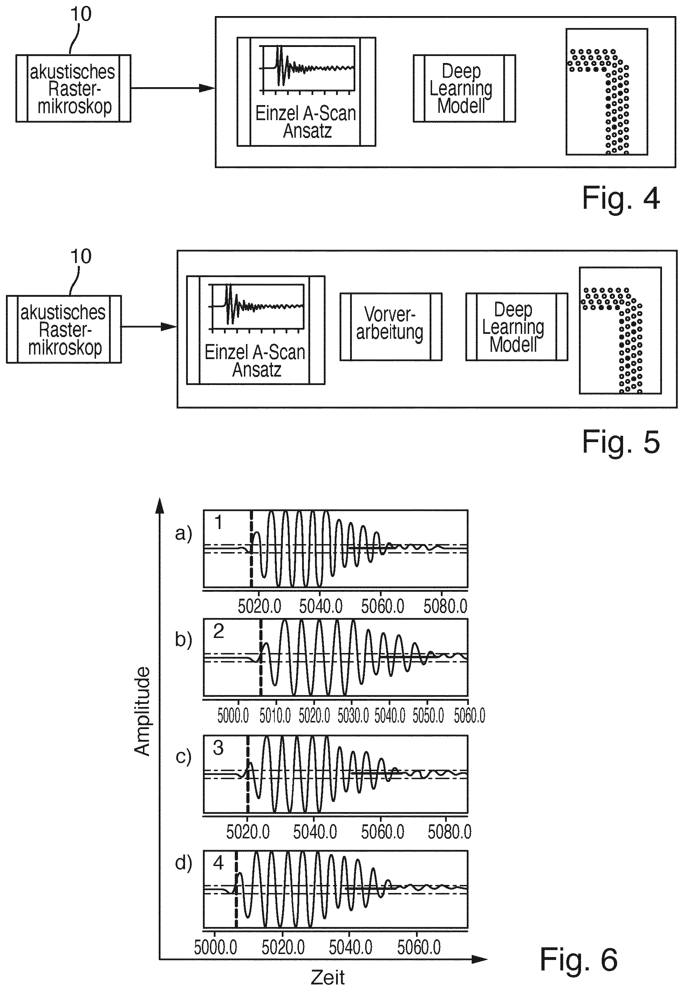

In Fig. 4 ist ein Beispiel für Unsupervised Deep Learning schematisch dargestellt. Ein Ultraschallmikroskop 10 macht an jedem Rasterpunkt einen Scan einer defektfreien Kontrollprobe 20 ("Single A-Scan Approach"). Die zeitlichen Verläufe bilden aufgrund der Defektfreiheit der Kontrollprobe 20 einen Gold-Standard. Im Folgenden wird das neuronale Netz mittels eines Deep Learning Model an den Gesamtdaten der A-Scans angelernt. Das neuronale Netz lernt auf diese Weise die Charakteristika der A-Scan-Verläufe für alle in der Kontrollprobe enthaltenen Strukturen und richtet sich selbst so ein, dass es diese Signale optimal erkennt. Entsprechende Methoden sind bekannt, so dass das angelernte neuronale Netz die Kenntnis darüber hat, welche Arten von Signalen bei einer ordnungsgemäßen Probe zu erwarten sind. Später werden A-Scan-Signale von defekten Stellen daher auffallen und können identifiziert und markiert werden. Dies ist im rechten Teilbild zu erkennen, wo Defekte auf einer Flipchip-Probe kenntlich gemacht sind.

In Fig. 5 ist ein alternatives Verfahren gezeigt, das sich von demjenigen in Fig. 4 darin unterscheidet, dass die A-Scan-Signale vor dem Training bzw. vor der Analyse vorverarbeitet werden, beispielsweise durch Wavelet-Filterung, Upscaling oder ähnliches.

Anstelle eines Unsupervised Learning kann auch ein Supervised Learning stattfinden. In dem Fall wird anstelle einer defektfreien Kontrollprobe eine defektbehaftete Kontrollprobe gescannt. Es folgt ein Labelling-Schritt, in dem ein Experte oder ein anderes System, das zur Defekterkennung verwendet wird, Bereiche an der Kontrollprobe markiert, die für, gegebenenfalls verschiedene, Defekte einerseits und für, gegebenenfalls verschiedene, defektfreie Strukturen der Probe charakteristisch sind. Das neuronale Netzwerk wird dann auf das Ziel hin trainiert, die entsprechende Defekt- bzw. Struktur-Klassifikation möglichst genau zu reproduzieren. Auch Methoden zum Supervised Learning sind bekannt.

In Fig. 6 sind die zeitlichen Ultraschallsignalverläufe im Gate 40 für verschiedene der zuvor genannten Klassifikationen gezeigt. Die Probe ist in diesem Beispiel ein defekter Flipchip, entsprechend den jeweils rechten Darstellungen in Fig. 4 und 5. Der Gatebeginn ist jeweils durch eine vertikale Linie angezeigt. Von oben nach unten handelt es um ein Signal von einer defekten hellen Lötstelle, ein Signal von einer defekten dunklen Lötstelle, ein Signal von einer intakten Lötstelle und ein Signal aus einem anderen strukturellen Bereich. Das bloße Auge erkennt kaum Unterschiede. Ein neuronales Netz lernt bei seinem Training, welche Signalanteile oder -strukturen für die verschiedenen Klassifikationen charakteristisch sind.

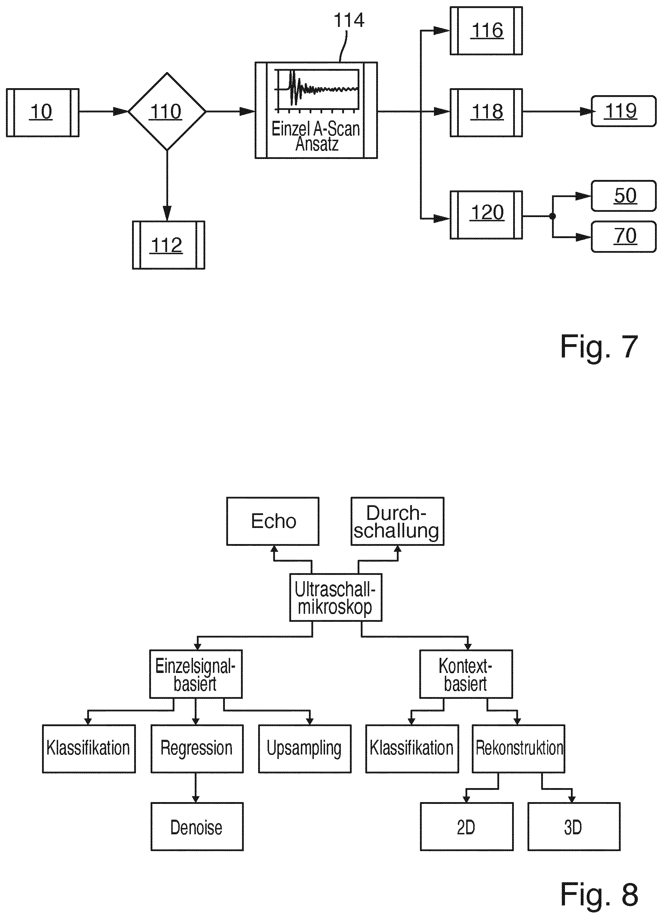

Fig. 7 zeigt eine schematische Darstellung eines generellen Arbeitsablaufs bei einer Datenanalyse mittels maschinellem Lernen. Ein Ultraschallmikroskop 10 macht einen Scan einer Probe, nimmt also an jedem Scanpunkt an der Probe einen zeitlichen Verlauf des Ultraschallsignals auf. Es folgt eine Methodenauswahl 110, in der eine Analysemethode 112 ausgewählt wird, beispielsweise die Analyse für jedes Pixel einzeln oder eine Nachbarschaftsauswertung eines beispielsweise quadratischen Bereichs, der beispielsweise eine Kantenlänge von 3 oder 5 Pixeln aufweist. Es können auch eine Anzahl benachbarter Pixel einer Zeile oder eine Reihe oder ein nicht-quadratischer zusammenhängender Bereich von Pixeln zusammen ausgewertet werden, gegebenenfalls mit einer vom Zentrum zum Rand des Bereichs abfallenden Gewichtung.

Nach Auswahl der Methode 112 wird die Menge der aufgenommenen Signale einer Auswertung zugeführt. Dies kann online und in Echtzeit, aber auch nachgelagert und gegebenenfalls offline erfolgen. Dabei können die aufgenommenen Ultraschallsignale beispielsweise einer Vorverarbeitung 116 unterzogen werden, etwa einem Upsampling, einem Downsampling und/oder einer Filterung, insbesondere Wavelet-Filterung. Es kann eine Regression 118 erfolgen, beispielsweise unter Verwendung eines Autoencoders 119. Ein Beispiel hierfür ist ein neuronales Netz, das Unsupervised trainiert wurde. Es kann auch eine Klassifikation 120 erfolgen unter Verwendung einer mittels Supervised Learning trainierten CNN 50 oder RNN 70.

Fig. 8 zeigt eine weitere schematische Darstellung von Komponenten eines erfindungsgemäßen Verfahrens. Unter Verweis auf die übrigen Figuren, insbesondere Fig. 1, erzeugt ein Ultraschallmikroskop 10 einen Puls 30, der mittels eines Ultraschalltransducers 12 durchgeschaltet wird und in Form von verschiedenen Echos 32, 34, 36 zurückkommt und digitalisiert und analysiert wird. Eine mögliche, aber nicht ausschließliche Aufteilung von Funktionalitäten ist eine einzelsignalbasierte oder kontextbasierte Funktionalität. So werden Regressionsfunktionalitäten wie beispielsweise eine Rauschunterdrückung ("Denoising"), oder das Upsampling typischerweise, aber nicht zwingend, auf die einzelnen Ultraschallsignale angewendet. Die einzelnen Ultraschallsignale können auch an sich bereits einer Klassifikation durch ein entsprechend trainiertes neuronales Netz unterzogen werden.

Kontextbasierte Funktionen betreffen die gemeinschaftliche Auswertung der Ultraschallsignale benachbarter Scanpunkte bzw. Pixel. Auch diese können mittels entsprechend trainierter neuronaler Netze klassifiziert werden. Die neuronalen Netze sind aufgrund der größeren Zahl von Input-Daten entsprechend größer dimensioniert, die größere Zahl verfügbarer Signale sorgt aber auch für eine gegebenenfalls größere Trennschärfe als im Fall der Einzelsignalanalyse. Diese komplexeren gemeinschaftlich ausgewerteten Signale eignen sich auch sehr gut für eine 2D- oder 3D-Rekonstruktion der Probe, da unkorreliertes Signalrauschen durch die Zusammenfassung der Signale benachbarter Rasterpunkte unterdrückt wird, so dass ein klareres rekonstruiertes Bild entstehen kann. Eine Rekonstruktion kann selbstverständlich auch anhand der Einzelsignale erfolgen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Der Schutzumfang der Erfindung wird durch die folgenden Ansprüche definiert.

### Bezugszeichenliste

- 10: Scanning-Ultraschallmikroskop
- 12: Ultraschalltransducer
- 20: Probe
- 22: Frontfläche
- 24: Rückfläche
- 26: Inneres Volumen
- 30: Ultraschallpuls
- 32: Echo von Frontfläche
- 34: Echo von Rückfläche
- 36: Echo aus dem inneren Volumen
- 40: Gate
- 50: CNN
- 52: Input-Layer
- 54: Faltungslagen
- 56: Global Averaging Pool
- 58: Klassifikator
- 60: K Ausgangsklassifikationen
- 70: RNN
- 71: Input
- 72: LSTM-Layer
- 74: Dichtes Layer
- 76: Softmax-Auswertung
- 78: Vorhersagen
- 110: Methodenauswahl
- 112: ausgewählte Methode
- 114: A-Scan
- 116: Vorverarbeitung
- 118: Regression
- 119: Autoencoder
- 120: Klassifikation

## Patentansprüche

1. Verfahren zur automatisierten Defekt-Klassifikation einer Probe (20) mittels akustischer Ultraschallmikroskopie, insbesondere im Frequenzbereich von 10 MHz bis 2000 MHz, wobei mit einem Ultraschallmikroskop (10) mit wenigstens einem Ultraschalltransducer (12) und einer Pulserzeugungs- und Empfängereinheit, die mit dem wenigstens einen Ultraschalltransducer (12) verbunden ist, eine Probe (20) abgetastet wird, die Probe (20) schrittweise relativ zu dem oder den Ultraschalltransducern (12) an Rasterpunkten positioniert wird und an jedem Rasterpunkt ein oder mehrere Ultraschallsignale erzeugt und nach Reflektion an und/oder in der Probe (20) und/oder nach Transmission durch die Probe (20) aufgezeichnet wird oder werden, wobei die zeitlichen Verläufe der aufgezeichneten reflektierten und/oder transmittierten Ultraschallsignale, sogenannte A-Scan-Signale, digitalisiert und mittels wenigstens eines neuronalen Netzes (50, 70) bezüglich Defekten analysiert, insbesondere klassifiziert, werden, welches zuvor in einem initialen Training mittels eines Deep Learning Algorithmus anhand von A-Scan-Signalen von Ultraschallmikroskop-Scans eines oder mehrerer zur Probe (20) typengleichen Kontrollproben unsupervised oder mit bekannten und gelabelten Defekten trainiert worden war.

2. Verfahren nach Anspruch 1, **dadurch gekennzeichnet, dass** der oder die Ultraschalltransducer (12) als Breitband-Ultraschalltransducer (12) ausgebildet ist oder sind, insbesondere mit einer Bandbreite von wenigstens 10 %, insbesondere wenigstens 20 %, wobei der oder die Ultraschalltransducer (12) insbesondere ausgebildet ist oder sind, Signale, die auf Modenkonversion, Mehrfachechos, Rayleigh-Wellen, Lamb-Wellen und/oder aufgrund von intrinsischen Eigenschaften des Transducers (12) entstehen, aufzunehmen und an einen Empfänger weiterzuleiten.

3. Verfahren nach Anspruch 1 oder 2, **dadurch gekennzeichnet, dass** das neuronale Netz (50, 70)
- ein neuronales Faltungsnetzwerk (CNN) (50) ist, insbesondere mit einer 1d-Resnet Architektur mit 1-dimensionalen Faltungsblöcken, und der Deep Learning Algorithmus, insbesondere eine automatisierte Feature Extraction umfasst, oder
- ein rekurrentes neuronales Netzwerk (RNN) (70) ist, insbesondere mit einer Long Short-Term Memory (LSTM)- oder Gated Recurrent Unit (GRU)-basierten Architektur, und der Deep Learning Algorithmus insbesondere eine Anpassung einer feed-forward stage des RNN umfasst, oder
- ein Hybrid aus einem CNN und einem RNN ist.

4. Verfahren nach einem der Ansprüche 1 bis 3, **dadurch gekennzeichnet, dass** die Ultraschallsignale vor der Analyse mittels eines deterministischen Algorithmus geglättet werden, insbesondere mittels Wavelet-Filterung, insbesondere auf der Grundlage von Daubechies Wavelets oder Mexican Hat Wavelets.

5. Verfahren nach einem der Ansprüche 1 bis 4, **dadurch gekennzeichnet, dass** der zeitliche Verlauf der Ultraschallsignale als diskrete Zeitreihe in der Form {Signallänge x 1} analysiert wird, und/oder dass eine volumetrische Analyse erfolgt, wobei mehrere Ultraschallsignale benachbarter Rasterpunkte als diskrete Zeitreihen von, insbesondere in einem Rechteck der Kantenlängen *n* x m angeordneten, Rasterpunkten als Datensatz der Form {Signallänge x *n* x *m*}, wobei wenigstens eines von *n* und *m* ≥ *2* ist, zusammengefasst und analysiert werden, wobei insbesondere *n* = *m*, wobei insbesondere n und m ungerade Zahlen sind.

6. Verfahren nach Anspruch 5, **dadurch gekennzeichnet, dass** die Datensätze der diskretisierten Ultraschallsignale zweidimensional sind, mit dem diskretisierten Ultraschallsignal in der ersten Dimension und Zeitschritten von 1 in der zweiten Dimension.

7. Verfahren nach einem der Ansprüche 1 bis 6, **dadurch gekennzeichnet, dass** die Klassifikation eine oder mehrere Klassen für die Abwesenheit von Defekten, insbesondere mit einer oder mehreren Klassen für eine oder mehrere Strukturen, und eine oder mehrere Klassen für Defekte, insbesondere verschiedene Arten von Defekten, aufweist.

8. Verfahren nach einem der Ansprüche 1 bis 7, **dadurch gekennzeichnet, dass** bei der Klassifizierung eine Konfidenz für die jeweilige Klassifikation ermittelt wird, welche insbesondere in einer Darstellung zu jedem Rasterpunkt durch einen Intensitätswert dargestellt wird.

9. Verfahren nach einem der Ansprüche 1 bis 8, **dadurch gekennzeichnet, dass** für Rasterpunkte die Analyse mit Defekt-Klassifikation durchgeführt wird und die Klassifikation, und insbesondere auch eine Konfidenz hierzu, einem C-Scan-Bild als Farb- oder Grauwert überlagert wird, wobei insbesondere die Konfidenz als Helligkeitsparameter, Farbparameter oder Transparenzparameter einfließt.

10. Verfahren nach einem der Ansprüche 1 bis 9, dass die Ultraschallsignale vor der Verarbeitung durch das neuronale Netz (50, 70) mittels einer Regression, insbesondere durch Interpolation oder mittels eines trainierten statistischen Modells, in ein Signal einer vordefinierten Länge und/oder vordefinierten zeitlichen Schrittweite umgewandelt werden, insbesondere ohne Informationsverlust bezüglich der Probe (20), wobei insbesondere Rauschen, Signalartefakte und/oder bauartbedingte Störsignale und Verzeichnungen reduziert werden.

11. Verfahren nach einem der Ansprüche 1 bis 10, **dadurch gekennzeichnet, dass** die Ultraschallsignale mittels einer Encoder-Decoder-Architektur anomaliebereinigt werden, wobei die Ultraschallsignale in Komponenten zerlegt und, basierend auf antrainierten Domainwissen, wieder rekonstruiert werden, wobei aus der Differenz aus Eingangssignal und rekonstruiertem Signal ein Rekonstruktionsfehler abgeleitet wird.

12. Verfahren nach einem der Ansprüche 1 bis 11, **dadurch gekennzeichnet, dass** ein rekonstruierter 3D-Datensatz des Probenvolumens der Probe (20) unter Berücksichtigung der Eigenschaften der Ultraschallausbreitung in der Probe (20) von einem trainierten statistischen Modell erzeugt wird, welche um Effekte durch Defokussierung, Mehrfachechos, modenkonvertierte Signale und intrinsische Transducersignale bereinigt ist, der die Erzeugung von Schnittbildern entlang beliebiger Ebenen erlaubt.

13. Verfahren nach einem der Ansprüche 1 bis 12, **dadurch gekennzeichnet, dass** als Grundlage für das initiale Training ein untrainiertes neuronales Netz (50, 70) oder ein anhand wenigstens einer typenfremden Kontrollprobe wenigstens eines fremden Probentyps vortrainiertes neuronales Netz (50, 70) verwendet wird.

14. Verfahren nach einem der Ansprüche 1 bis 13, **dadurch gekennzeichnet, dass** für das initiale Training des neuronalen Netzes (50, 70) das Labelling von Defekten und anderen Teilen der Kontrollprobe von Hand, insbesondere an einem C-Scan-Schnitt, erfolgt, wobei insbesondere die von Hand markierten Bereiche weniger als 50 %, insbesondere weniger als 20 %, insbesondere weniger als 10 %, der Fläche des Scans der Kontrollprobe ausmachen.

15. Softwareprogrammprodukt mit Programmcodemitteln, welche bei Ausführung auf einer Datenverarbeitungsanlage eines Ultraschallmikroskops (10) gemäß Anspruch 16 das Ultraschallmikroskop (10) veranlassen, ein Verfahren nach einem der Ansprüche 1 bis 14 auszuführen.

16. Ultraschallmikroskop (10) mit einem Positioniersystem mit einer Halterung für eine Probe (20), wenigstens einem Ultraschalltransducer (12), insbesondere Breitband-Ultraschalltransducer (12), einer Pulserzeugungs- und Empfängereinheit, die mit dem wenigstens einen Ultraschalltransducer (12) verbunden oder verbindbar ist, einer Datenverarbeitungsanlage und einer Analog-Digital-Wandlereinheit, wobei das Ultraschallmikroskop (10), insbesondere mittels eines in der Datenverarbeitungsanlage gespeicherten ausführbaren Softwareprogrammprodukts gemäß Anspruch 15, zur Durchführung eines Verfahrens nach einem der Ansprüche 1 bis 14 ausgebildet und eingerichtet ist.

## Claims

1. A method for automated defect classification of a sample (20) by means of acoustic ultrasonic microscopy, in particular in the frequency range of 10 MHz to 2000 MHz, wherein a sample (20) is scanned with an ultrasonic microscope (10) with at least one ultrasonic transducer (12) and a pulse generating and receiving unit, which is connected with the at least one ultrasonic transducer (12), the sample (20) is positioned stepwise relative to the ultrasonic transducer (20) or transducers (20) at raster points, and one or more ultrasound signals is or are generated at each raster point and recorded after reflection on and/or in the sample (20) and/or after transmission by the sample (20), wherein the chronological sequences of the recorded ultrasound signals reflected and/or transmitted, so-called A-scan signals, are digitized and analysed, in particular classified, with regard to defects by means of at least one neural network (50, 70), which had previously been trained in an initial training by means of a deep learning algorithm with the help of A-scan signals of ultrasonic microscope scans of one or more control samples of the same type as the sample unsupervised or with known and labelled defects.

2. The method according to claim 1, **characterized in that** the ultrasonic transducer (12) or transducers (12) is or are designed as broadband ultrasonic transducer (12) or transducers (12), in particular with a bandwidth of at least 10%, in particular at least 20%, wherein the ultrasonic transducer (12) or transducers (12) is or are in particular designed to record signals, which are produced from mode conversion, multiple echoes, Rayleigh waves, Lamb waves and/or due to intrinsic properties of the transducer (12), and to forward them to a receiver.

3. The method according to claim 1 or 2, **characterized in that** the neural network (50, 70)
- is a neural convolutional network (CNN) (50), in particular with a 1-D-resnet architecture with 1-dimensional convolutional blocks, and the deep learning algorithm includes in particular an automated feature extraction, or
- is a recurrent neural network (RNN) (70), in particular with a Long Short-Term Memory (LSTM) or Gated Recurrent Unit (GRU)-based architecture, and the deep learning algorithm includes in particular an adaptation of a feed-forward stage of the RNN, or
- is a hybrid of a CNN and an RNN.

4. The method according to any one of claims 1 to 3, **characterized in that** the ultrasound signals are smoothed by means of a deterministic algorithm prior to the analysis, in particular by means of wavelet filtering, in particular on the basis of Daubechies wavelets or Mexican hat wavelets.

5. The method according to any one of claims 1 to 3, **characterized in that** the chronological sequence of the ultrasound signals is analyzed as a discrete time series in the form {signal length x 1}, and/or that a volumetric analysis takes place, wherein several ultrasound signals of adjacent raster points are combined and analyzed as discrete time series of raster points, in particular arranged in a rectangle of the edge lengths *n* x m, as a data set of the form {signal length x *n* x *m*}, wherein at least one of *n* and *m* is ≥ 2, wherein in particular *n* = *m*, wherein in particular n and m are odd numbers.

6. The method according to claim 5, **characterized in that** the data sets of the discretized ultrasound signals are two-dimensional, with the discretized ultrasound signal in the first dimension and time steps of 1 in the second dimension.

7. The method according to any one of claims 1 to 6, **characterized in that** the classification comprises one or more classes for the absence of defects, in particular with one or more classes for one or more structures, and one or more classes for defects, in particular different kinds of defects.

8. The method according to any one of claims 1 to 7, **characterized in that** in the classification a confidence is determined for the respective classification, which is represented in particular in a representation for each raster point by an intensity value.

9. The method according to any one of claims 1 to 8, **characterized in that** the analysis is done with defect classification for raster points and the classification, and in particular also a confidence for this, is superimposed onto a C-scan image as a colour or grey scale value, wherein in particular the confidence is integrated as a brightness parameter, colour parameter or transparency parameter.

10. The method according to any one of claims 1 to 9, **characterized in that**, prior to the processing by the neural network (50, 70), the ultrasound signals are converted by means of regression, in particular by interpolation or by means of a trained statistical model, into a signal of a predefined length and/or predefined chronological increment, in particular without loss of information with regard to the sample (20), wherein, in particular, noise, signal artefacts and/or interference signals and distortions due to design are reduced.

11. The method according to any one of claims 1 to 10, **characterized in that** the ultrasound signals are corrected for anomalies by means of an encoder-decoder architecture, wherein the ultrasound signals are decomposed into components and reconstructed again based on trained domain knowledge, wherein a reconstruction error is derived from the difference of the input signal and the reconstructed signal.

12. The method according to any one of claims 1 to 11, **characterized in that** a reconstructed 3-D data set of the sample volume of the sample (20) is generated by a trained statistical model in consideration of the properties of the ultrasound propagation in the sample (20), which is corrected for effects by defocusing, multiple echoes, mode-converted signals, and intrinsic transducer signals, allowing the generation of sectional images along any planes.

13. The method according to any one of claims 1 to 12, **characterized in that** an untrained neural network (50, 70) or a neural network (50, 70) pre-trained with the help of at least one control sample of foreign types of at least one foreign sample type is used as the basis for the initial training.

14. The method according to any one of claims 1 to 13, **characterized in that** for the initial training of the neural network (50, 70) the labelling of defects and other parts of the control sample takes place by hand, in particular on a C-scan section, wherein in particular the regions marked by hand account for less than 50%, in particular less than 20%, in particular less than 10%, of the area of the scan of the control sample.

15. Software program product with program code means, which, upon execution on a data processing installation of an ultrasonic microscope (10), cause the ultrasonic microscope (10) according to claim 16 to execute a method according to any one of claims 1 to 14.

16. An ultrasonic microscope (10) having a positioning system with a holder for a sample (20), at least one ultrasonic transducer (12), in particular a broadband ultrasonic transducer (12), a pulse generating and receiving unit, which is connected or connectible with the at least one ultrasonic transducer (12), a data processing installation and an analog-to-digital converter unit, wherein, in particular, the ultrasonic microscope (10) is designed and disposed for performing a method according to any one of claims 1 to 14, in particular by means of a software program product according to claim 15, executable and stored in the data processing installation.

## Revendications

1. Procédé de classification automatisée des défauts d'un échantillon (20) au moyen d'une microscopie acoustique à ultrasons, en particulier dans la gamme de fréquences allant de 10MHz à 2000MHz, dans lequel un échantillon (20) est balayé au moyen d'un microscope à ultrasons (10) comprenant au moins un transducteur à ultrasons (12) et une unité de génération et de réception d'impulsions qui est reliée audit au moins un transducteur à ultrasons (12), l'échantillon (20) étant positionné pas à pas par rapport au ou aux transducteurs à ultrasons (12) en des points d'une trame, et un ou plusieurs signaux ultrasonores étant générés en chaque point de la trame et enregistrés après réflexion sur et/ou dans l'échantillon (20) et/ou après transmission à travers l'échantillon (20), les courbes temporelles des signaux ultrasonores réfléchis et/ou transmis enregistrés, appelés signaux A-Scan, étant numérisées et analysées, en notamment classifiées, afin de détecter des défauts, au moyen d'au moins un réseau neuronal (50, 70), qui a été préalablement entraîné de manière non supervisée ou avec des défauts connus et étiquetés lors d'un apprentissage initial au moyen d'un algorithme d'apprentissage profond sur la base de signaux A-Scan provenant de balayages de microscope à ultrasons d'un ou plusieurs échantillons de contrôle de même type que l'échantillon (20).

2. Procédé selon la revendication 1, **caractérisé en ce que** le ou les transducteurs à ultrasons (12) sont conçus sous la forme de transducteurs à ultrasons à large bande (12), en particulier avec une bande passante d'au moins 10%, en particulier d'au moins 20%, le ou les transducteurs à ultrasons (12) étant notamment conçus pour enregistrer des signaux qui apparaissent en raison d'une conversion de mode, d'échos multiples, d'ondes de Rayleigh, d'ondes de Lamb, et/ou en raison de propriétés intrinsèques du transducteur (12), et pour les transmettre à un récepteur.

3. **Procédé** selon la revendication 1 ou la revendication 2, **caractérisé en ce que** le réseau neuronal (50, 70)
- est un réseau neuronal convolutif (CNN) (50), en particulier avec une architecture Resnet 1d avec des blocs convolutifs unidimensionnels, et l'algorithme d'apprentissage profond comprend en particulier une extraction automatisée de caractéristiques, ou
- est un réseau neuronal récurrent (RNN) (70), en particulier avec une architecture basée sur une mémoire à court terme longue (LSTM) ou une unité récurrente gérée (GRU), et l'algorithme d'apprentissage profond comprend en particulier une adaptation d'une étape *feed-forward* du RNN, ou
- est un hybride d'un CNN et d'un RNN.

4. Procédé selon l'une des revendications 1 à 3, **caractérisé en ce que** les signaux ultrasonores sont lissés avant l'analyse au moyen d'un algorithme déterministe, en particulier au moyen d'un filtrage par ondelettes, en particulier sur la base d'ondelettes de Daubechies ou d'ondelettes Mexican Hat.

5. Procédé selon l'une des revendications 1 à 4, **caractérisé en ce que** l'évolution temporelle des signaux ultrasonores est analysée sous forme de série chronologique discrète sous la forme (longueur du signal x 1}, et/ou **en ce qu'**une analyse volumétrique est effectuée, plusieurs signaux ultrasonores de points de trame voisins étant regroupés sous forme de séries chronologiques discrètes de points de trame, en particulier agencés dans un rectangle de longueurs d'arête *n* x *m*, en tant qu'ensemble de données sous la forme (longueur du signal x *n* x *m*}*,* dans lequel au moins un parmi *n* et *m* ≥ 2, et analysés, dans lequel en particulier *n = m*, dans lequel en particulier *n* et *m* sont des nombres impairs.

6. Procédé selon la revendication 5, **caractérisé en ce que** les ensembles de données des signaux ultrasonores discrétisés sont bidimensionnels, avec le signal ultrasonore discrétisé dans la première dimension et des intervalles de temps de 1 dans la deuxième dimension.

7. Procédé selon l'une des revendications 1 à 6, **caractérisé en ce que** la classification comprend une ou plusieurs classes pour l'absence de défauts, en particulier avec une ou plusieurs classes pour une ou plusieurs structures, et une ou plusieurs classes pour les défauts, en particulier différents types de défauts.

8. Procédé selon l'une des revendications 1 à 7, **caractérisé en ce que**, lors de la classification, un niveau de confiance est déterminé pour chaque classification, qui est représenté en particulier dans une représentation, pour chaque point de la trame, par une valeur d'intensité.

9. Procédé selon l'une des revendications 1 à 8, **caractérisé en ce que** l'analyse avec classification des défauts est effectuée pour les points de la trame et **en ce que** la classification, et en particulier également un degré de confiance pour celle-ci, est superposée à une image C-Scan sous forme de valeur de couleur ou de gris, le degré de confiance étant notamment pris en compte sous forme de paramètre de luminosité, de paramètre de couleur ou de paramètre de transparence.

10. Procédé selon l'une des revendications 1 à 9, dans lequel les signaux ultrasonores sont convertis, avant leur traitement par le réseau neuronal (50, 70), au moyen d'une régression, en particulier par interpolation ou au moyen d'un modèle statistique entraîné, en un signal d'une longueur prédéfinie et/ou d'un pas temporel prédéfini, en particulier sans perte d'informations concernant l'échantillon (20), ce qui permet notamment de réduire le bruit, les artefacts de signal et/ou les signaux parasites et les distorsions liés à la conception.

11. Procédé selon l'une des revendications 1 à 10, **caractérisé en ce que** les signaux ultrasonores sont corrigés des anomalies au moyen d'une architecture codeur-décodeur, les signaux ultrasonores étant décomposés en composants et reconstruits sur la base de connaissances du domaine acquises par apprentissage, une erreur de reconstruction étant déduite de la différence entre le signal d'entrée et le signal reconstruit.

12. Procédé selon l'une des revendications 1 à 11, **caractérisé en ce qu'**un ensemble de données 3D reconstitué du volume de l'échantillon (20) est généré par un modèle statistique entraîné, en tenant compte des propriétés de la propagation des ultrasons dans l'échantillon (20), lequel ensemble de données est corrigé des effets dus à la défocalisation, aux échos multiples, aux signaux convertis en mode et aux signaux de transducteur intrinsèques, qui permet la génération d'images en coupe le long de plans arbitraires.

13. Procédé selon l'une des revendications 1 à 12, **caractérisé en ce qu'**un réseau neuronal non entraîné (50, 70) ou un réseau neuronal pré-entraîné (50, 70) au moyen d'au moins un échantillon de contrôle de type étranger d'au moins un type d'échantillon étranger est utilisé comme base pour l'entraînement initial.

14. Procédé selon l'une des revendications 1 à 13, **caractérisé en ce que**, pour l'entraînement initial du réseau neuronal (50, 70), l'étiquetage des défauts et d'autres parties de l'échantillon de contrôle est effectué à la main, en particulier sur une coupe C-scan, les zones marquées à la main représentant en particulier moins de 50%, en particulier moins de 20%, en particulier moins de 10%, de la surface du scan de l'échantillon de contrôle.

15. Produit de programme d'ordinateur avec des moyens de code de programme qui, lors de leur exécution sur un système de traitement de données d'un microscope à ultrasons (10) selon la revendication 16, amènent le microscope à ultrasons (10) à mettre en œuvre un procédé selon l'une des revendications 1 à 14.

16. Microscope à ultrasons (10) avec un système de positionnement comprenant un support pour un échantillon (20), au moins un transducteur à ultrasons (12), en particulier un transducteur à ultrasons à large bande (12), une unité de génération et de réception d'impulsions qui est reliée ou est apte à être reliée audit au moins un transducteur à ultrasons (12), d'un dispositif de traitement de données et d'une unité de conversion analogiquenumérique, le microscope à ultrasons (10) étant conçu et agencé, en particulier au moyen d'un produit logiciel exécutable enregistré dans le dispositif de traitement de données selon la revendication 15, pour mettre en œuvre un procédé selon l'une des revendications 1 à 14.
